(19) Europäisches Patentamt
European Patent Office
Office européen des brevets

(11) EP 3 930 173 A1

(12) EUROPÄISCHE PATENTANMELDUNG

(43) Veröffentlichungstag:
**29.12.2021 Patentblatt 2021/52**

(21) Anmeldenummer: **20182525.4**

(22) Anmeldetag: **26.06.2020**

(51) Int Cl.:
***H02M 7/5387*** (2007.01) ***H02M 7/5395*** (2006.01)
*H02M 1/32* (2007.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH**
**26607 Aurich (DE)**

(72) Erfinder: **GENSIOR, Albrecht**
**01277 Dresden (DE)**

(74) Vertreter: **Eisenführ Speiser**
**Patentanwälte Rechtsanwälte PartGmbB**
**Postfach 10 60 78**
**28060 Bremen (DE)**

# (54) VERFAHREN ZUM STEUERN EINES UMRICHTERS

(57) Die vorliegende Erfindung betrifft ein Verfahren zum Steuern eines, eine Vielzahl von, bevorzugt parallelen, Umrichtermodulen (1110, 1120) aufweisenden Umrichters (1100), insbesondere Leistungsumrichters einer Windenergieanlage (100), umfassend die Schritte: Ansteuern eines ersten Umrichtermoduls (1110), sodass das Umrichtermodul (1110) in einer ersten Schalterstellung ($S_{p,1}$) einen ersten elektrischen Wechselstrom ($i_{p,1}$) erzeugt, Ansteuern eines zweiten Umrichtermoduls (1120), sodass das Umrichtermodul (1120) in einer zweiten Schalterstellung ($S_{p,2}$) einen zweiten elektrischen Wechselstrom ($i_{p,2}$) erzeugt, Überlagern des ersten elektrischen Wechselstroms und des zweiten elektrischen Wechselstroms zu einem Gesamtstrom ($i_{gp}$), Erfassen des Gesamtstroms ($i_{gp}$) des Umrichters, Bestimmen eines virtuellen Stromes ($i_v$) in Abhängigkeit der ersten und zweiten Schalterstellung ($S_{p,1}$, $S_{p,2}$), Verändern der ersten Schalterstellung des ersten Umrichtermoduls ($S_{p,1}$) und/oder der zweiten Schalterstellung des zweiten Umrichtermoduls ($S_{p,2}$) in Abhängigkeit des Gesamtstromes ($i_{gp}$) und des virtuellen Stromes ($i_v$).

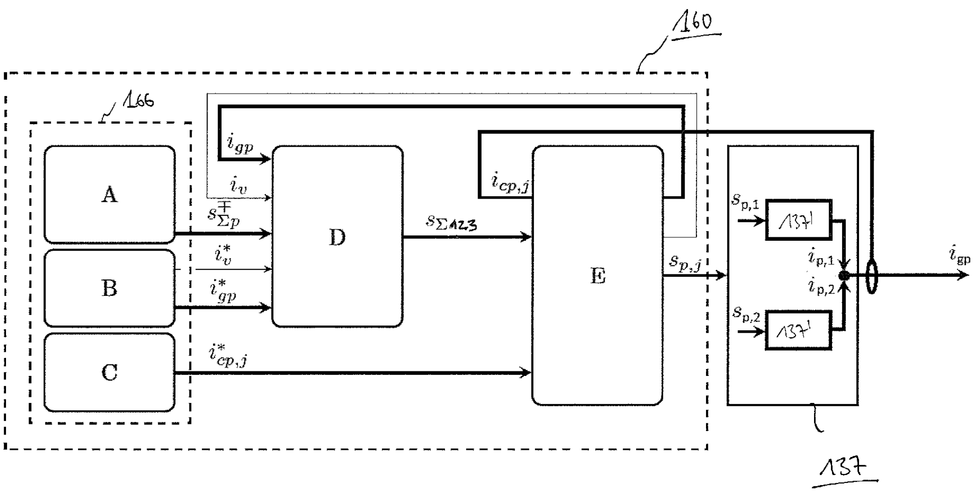


Fig. 4

EP 3 930 173 A1

Printed by Jouve, 75001 PARIS (FR)

## Beschreibung

Die vorliegende Erfindung betrifft ein Verfahren zum Steuern eines, eine Vielzahl von, bevorzugt parallelen, Umrichtermodulen aufweisenden Umrichter, insbesondere einen Leistungsumrichter einer Windenergieanlage sowie einen, einen solchen Umrichter aufweisenden Erzeuger elektrischer Energie, insbesondere eine, einen solchen Umrichter aufweisende Windenergieanlage.

Im Bereich der Erzeuger elektrischer Energie, insbesondere bei Windenergie- oder Photovoltaikanlagen, ist es üblich, mehrere Umrichter bzw. Umrichtermodule parallel zu schalten, um die Gesamtleistung des Umrichtersystems zu erhöhen.

Um zirkulierende Ströme innerhalb dieses Umrichtersystems zu verhindern, müssen Maßnahmen ergriffen werden, die zugleich nicht der Leistungsabgabe des Umrichtersystems qualitativ oder quantitativ mindern.

Beim Steuern von Umrichtersystemen sind also eine Vielzahl von Kriterien zu berücksichtigen, wie bspw. die Einhaltung von Grenzwerten für die Zwischenkreisspannung, potentielle Ringströme oder netzseitige Anforderungen.

Nachteilig bei bisher bekannten Verfahren ist, dass keine Koordination der Schalthandlungen über die Grenze der Umrichtermodule hinaus stattfindet.

Aufgabe der vorliegenden Erfindung ist es daher ein Verfahren zum Steuern von Umrichtersystemen bereitzustellen, die eine Vielzahl von parallelen Umrichtermodulen aufweisen, koordiniert zu steuern.

Erfindungsgemäß wird somit ein Verfahren zum Steuern eines, eine Vielzahl von, bevorzugt parallelen, Umrichtermodulen aufweisenden Umrichters , insbesondere Leistungsumrichters einer Windenergieanlage vorgeschlagen, umfassend die Schritte: Ansteuern eines ersten Umrichtermoduls, sodass das Umrichtermodul in einer ersten Schalterstellung einen ersten elektrischen Wechselstrom erzeugt, Ansteuern eines zweiten Umrichtermoduls, sodass das Umrichtermodul in einer zweiten Schalterstellung einen zweiten elektrischen Wechselstrom erzeugt, Überlagern des ersten elektrischen Wechselstroms und des zweiten elektrischen Wechselstroms zu einem Gesamtstrom, Erfassen des Gesamtstroms des Umrichters, Bestimmen eines virtuellen Stromes in Abhängigkeit der ersten und zweiten Schalterstellung, Verändern der ersten Schalterstellung des ersten Umrichtermoduls und/oder der zweiten Schalterstellung des zweiten Umrichtermoduls in Abhängigkeit des Gesamtstromes und des virtuellen Stromes.

Der Umrichter ist dabei bevorzugt als Umrichtersystem ausgebildet und umfasst eine Vielzahl von Umrichtermodulen, die parallel miteinander verschaltet sind, insbesondere um die Leistungsabgabe der Umrichtermodule aufzusummieren, sodass die Gesamtleistung des Umrichtersystems erhöht wird. Ferner ist der Umrichter bzw. das Umrichtersystem als Wechselrichter eines Leistungsumrichters einer Windenergieanlage ausgebildet.

Die Umrichtermodule sind bevorzugt 3-phasig ausgeführt und erzeugen jeweils einen Strom pro Phase. In einer bevorzugten Ausführungsform ist der Umrichter somit dreiphasig ausgeführt, insbesondere umfassend die drei Phasen p=1, p=2, und p=3.

In einer bevorzugten Ausführungsform ist der Umrichter als sogenannter Leistungsumrichter und/oder als grid converter ausgeführt. Bspw. umfasst der Umrichter hierfür zehn Umrichtermodule mit jeweils einer Nennleistung von 400 kW, sodass der Umrichter eine Gesamtleistung von 4 MW aufweist. Ferner umfasst der Umrichter zudem eine Steuereinheit, die dazu eingerichtet ist, die Umrichtermodule derart anzusteuern, dass der Umrichter sowohl strom- als auch spannungsprägend an einem elektrischen Versorgungsnetz arbeitet.

Vorzugsweise ist das erste Umrichtermodul hierfür derart parallel zum zweiten Umrichtermodul verschaltet, dass sich der erste elektrische Wechselstrom und der zweite elektrische Wechselstrom zu einem gemeinsamen Umrichterstrom, dem Gesamtstrom, überlagern.

In einem ersten Schritt werden die Umrichtermodule durch eine Steuereinheit derart angesteuert, dass die Umrichtermodule mittels bestimmter Schalterstellungen jeweils einen Wechselstrom erzeugen. Diese Schalterstellungen einer Phase können auch als Summe aller Schalterstellungen $S_{\sum p}$ bzw. $S_{\sum 123}$ zusammengefasst werden, wobei die Schalterstellungen eines Umrichtermoduls jeweils bspw. die diskreten Zustände 0 und 1 einnehmen können. Bevorzugt werden die Schalterstellungen dabei für jede Phase p und für jeden Umrichter j einzeln bestimmt.

In einem nächsten Schritt werden die, durch die Umrichtermodule erzeugten Ströme zu einem Gesamtstrom ig überlagert. Hierfür weist der Umrichter bspw. einen Knoten auf, in dem die, von dem Umrichtermodulen erzeugten Ströme phasengleich überlagert werden, also der Strom $i_{1,1}$ der ersten Phase des ersten Umrichtermoduls mit dem Strom $i_{1,2}$ der ersten Phase des zweiten Umrichtermoduls, usw. Hierdurch ergeben sich die drei Summenströme $I_{g,1}$, $I_{g,2}$, $I_{g,3}$ der Phasen 1, 2 und 3, die zusammen den Gesamtstrom $I_{gp}$ des Umrichters bilden.

In einem nächsten Schritt wird dieser Gesamtstrom $I_{gp}$ des Umrichters, insbesondere netzseitig, erfasst, bspw. durch eine Stromerfassung, die mit der Steuereinheit des Umrichters verbunden ist. Bevorzugt wird durch die Stromerfassung an jedem Ausgang eines jeden Umrichtermoduls der Strom phasenweise erfasst, um den Gesamtstrom $i_{gp}$ zu bestimmen.

Zudem wird in Abhängigkeit der Schalterstellungen ein virtueller Strom $i_v$ bestimmt. Hierfür werden bspw. alle Schalterstellungen aller Umrichtermodule aufsummiert. Hierfür weist jeder Schalter bspw. eine diskrete Schalterstellung +1 oder -1 auf, die zu einer Summe aufsummiert wird. Diese Summe wird dann dazu verwendet, einen virtuellen Strom

$i_v$ zu bestimmen, bspw. mittels einer Integration, insbesondere durch aufintegrieren der Summe aller Schalterstellungen. Der virtuelle Strom gibt also insbesondere einen bestimmten Zustand aller Schalterstellungen aller Umrichtermodule des Umrichters wieder. Der virtuelle Strom hat zudem insbesondere die Aufgabe die Schalterstellungen, bevorzugt phasenweise, voneinander zu entkoppeln, insbesondere um den voneinander getrennten Umrichter- und Netzanforderungen gerecht zu werden. Der virtuelle Strom wird also bevorzugt insbesondere dazu verwendet, die Schalter einer Phase von den Schaltern einer anderen Phase zu entkoppeln.

Anschließend werden die Schalterstellungen der Umrichtermodule bzw. des Umrichters in Abhängigkeit des erfassten Gesamtstromes und des virtuellen Stromes geändert.

Vorzugsweise wird zum Verändern der ersten Schalterstellung und/oder der zweiten Schalterstellung eine kaskadierte Regelung verwendet wird, die eine überlagerte und eine unterlagerte Regelung aufweist.

Die überlagerte Regelung wird dabei insbesondere dazu verwendet, die Schalterstellungen $S_{\sum 123}$ des Umrichters zu bestimmen.

Im Falle einer Parallelschaltung von bspw. n Zweipunktstromrichtern als Umrichtermodule kann jede Komponente von $S_{\sum 123}$ Werte aus der Menge S = {-n;-n+2; ... ; n} annehmen. Die Wahl der Werte wird, dank der Entkopplung mittels des virtuellen Stromes $i_v$ für jede Phase separat, einem Toleranzbandregler bzw. einem Steuerblock überlassen, der aus einer zuvor getroffenen Vorauswahl, nämlich der Werte $s^{+}_{\Sigma p}$ und $s^{-}_{\Sigma p}$ jeweils den Wert wählt, der den Betrag der Regelabweichung reduziert. Die Vorauswahl ist dabei so gestaltet, dass der Betrag der Ableitung des Regelfehlers möglichst klein ist. Dies sorgt für möglichst lange Zeiten zwischen Schalthandlungen und reduziert damit die Schaltverluste.

Die unterlagerte Regelung wird dabei insbesondere dazu verwendet, die in der Vorauswahl getroffenen Summenschalterstellungen auf die Umrichtermodule zu verteilen und dabei die einzelnen Ströme der Umrichter einzustellen.

Bevorzugt ist die unterlagerte Regelung so ausgeführt, dass die Ströme in den einzelnen Umrichtermodulen nicht zu stark voneinander abweichen bzw. dass eine gewünschte Lastverteilung auf die Umrichter sichergestellt wird. Auch hier kann jede Phase getrennt von den anderen betrachtet werden, was eine Parallelisierung der Abarbeitung ermöglicht.

In einer bevorzugten Ausführungsform werden die Schalterstellungen eines und/oder aller Umrichtermodul parallel bestimmt.

In einer weiter bevorzugten Ausführungsform umfassen die überlagerte Regelung und die unterlagerte Regelung jeweils wenigstens eine Hysterese-Regelung bzw. sind als Toleranzbandregler ausgeführt.

Vorzugsweise erfolgt das Erfassen des Gesamtstromes durch ein Erfassen eines jeden Stromes einer jeden Phase eines jeden Umrichtermoduls.

Es wird also insbesondere vorgeschlagen, dass der Gesamtstrom nicht direkt erfasst wird, sondern indirekt erfasst wird. Hierzu wird am Ausgang eines jeden Umrichtermoduls der entsprechende Strom des Umrichtermoduls in jeder Phase erfasst und anschließend zu dem Gesamtstrom aufsummiert. Hierfür wird bevorzugt die Stromerfassung eines jeden Umrichtermoduls verwendet, die bevorzugt mit der Steuerung eines jeden Umrichtermoduls verbunden ist. Die Steuerungen der Umrichtermodule sind zudem bevorzugt mit der Steuereinheit des Umrichters verbunden.

Vorzugsweise erfolgt das Verändern der ersten Schalterstellung des ersten Umrichtermoduls und/oder der zweiten Schalterstellung des zweiten Umrichtermoduls mittels Steuersignalen.

Hierfür weist der Umrichter bspw. eine Steuereinheit auf, die mit den Steuerungen der Umrichtermodule verbunden ist. Die Steuereinheit führt das vorstehend bzw. nachstehend beschriebene Verfahren aus, und übermittelt die bestimmten Schalterstellungen mittels Steuersignalen an die Umrichtermodule.

Es wird also insbesondere vorgeschlagen, die Schalterstellungen explizit von der Steuereinheit des Umrichters an die Steuerungen der Umrichtermodule zu übergeben. Hierdurch müssen die Steuerungen der Umrichtermodule keine aufwendigen Berechnungen vornehmen.

In einer weiter bevorzugten Ausführungsform umfassen die Steuersignale die expliziten Schalterstellungen der leistungselektronischen Schalter mit einer Totzeit. Alternativ umfassen die Steuersignale die Schalterstellungen einer Halbbrücke (zweier leistungselektronischer Schalter) und die Schalterstellungen der leistungselektronischen Schalter mit einer Totzeit wird durch die Steuerungen der Umrichtermodule eingefügt.

Vorzugsweise erfolgt das Verändern der ersten Schalterstellung des ersten Umrichtermoduls und der zweiten Schalterstellung des zweiten Umrichtermoduls in Abhängigkeit einer Summe der Schalterstellungen einer Phase über alle Umrichtermodule, insbesondere unter Verwendung eines Toleranzbandes.

Es wird also insbesondere auch vorgeschlagen, dass die Umrichtermodule phasenweise mittels Toleranzbändern gesteuert werden. Dies bedeutet insbesondere, dass jede Phase eines Umrichtermoduls durch jeweils ein Toleranzband gesteuert wird, insbesondere jedoch so, dass phasenweise die in Summe geforderte Schalterstellung gewährleistet bleibt.

Vorzugsweise wird die Summe der Schalterstellungen einer Phase aus wenigstens einem der nachfolgenden Liste bestimmt:

- einem Summenstrom einer Phase über alle Umrichtermodule;
- dem virtuellen Strom;
- einer Abrundungsfunktion für die Schalterstellungen;
- einem Referenzwert für den virtuellen Strom;
- einem Referenzwert für einen Gesamtstrom einer Phase aller Umrichtermodul.

Die Funktion für die Schalterstellungen, umfassend eine Abrundungsfunktion, kann bspw. beschrieben werden als:

$$s_{\Sigma p}^{\mp} = \pm 2 \left\lfloor \pm \frac{1}{2}\left(\left(U_{gp} - U_0 + L_{\alpha\beta}\left(\frac{d}{dt} i_{gp}^* + \frac{d}{dt} i_v^*\right) \pm U_{res}\right)\frac{2n}{U_c} + n \, mod \, 2\right)\right\rfloor - n \, mod \, 2,$$

wobei ⌊•⌋ die Abrundungsfunktion beschreibt bzw. bezeichnet mit:$U_{gp}$ = Netzspannung, insbesondere der drei Phasen 1, 2 und 3;;

$U_0$ = Mittelwert der drei Phasen der Netzspannung;
$L\alpha\beta$ = Induktivität in $\alpha\beta$-Kordinaten;
$U_{res}$ = Spannungs-Offset

Die Induktivität $L\alpha\beta$ kann unter Verwendung einer Induktivitätsmatrix bestimmt werden, die die Topologie des Umrichters wiedergibt, wie bspw. nachstehend in Fig. 3 gezeigt mit

$$L_c = \begin{pmatrix} L & M & M \\ M & L & M \\ M & M & L \end{pmatrix},$$

wobei
L die Induktivität einer Phase ist und M die entsprechenden Gegeninduktivitäten beschreibt.

Hierdurch ergibt sich

$$L_{\alpha\beta 0} = diag\left(L_{\alpha\beta}, L_{\alpha\beta}, L_g + (L + 2M)/n\right)$$

mit

$$L_{\alpha\beta} = L_g + (L - M)/n,$$

$L_g$ beschreibt dabei die Netzinduktivität.

Um eine Entkopplung zu erreichen, wird insbesondere vorgeschlagen, einen Entwurfsparameter einer Induktivität $L_v$ zu verwenden, welcher der Größe nach $L_{\alpha\beta}$ entspricht. Hierdurch ergibt sich aus $L\alpha\beta v$ = diag ($L\alpha\beta$, $L\alpha\beta$, Lv) mit Lv = $L\alpha\beta$ das $L\alpha\beta v$ =$L\alpha\beta$ * I ist, wobei I die Identitätsmatrix ist. Es wird also insbesondere vorgeschlagen, durch Wahl eines entsprechenden Parameters eine vollständige Entkopplung zu erreichen.

Der Spannungs-Offset $U_{res}$ kann auch als Spannungsfehler bezeichnet werden und wird bevorzugt als Reglerparameter verwendet, um eine Reglersicherheit zu gewährleisten. Bevorzugt wird Spannungs-Offset Ures größer Null gewählt.

Um ein zu häufiges Umschalten von $s_{\Sigma p}$ zu verhindern, wird bevorzugt eine Hysterese so implementiert, dass dieselbe Schalterstellung solange verwendet wird bis $|e_p| > h_\Sigma$, bspw. mittels einer zeitdiskreten Implementierung gemäß

$$s_{\Sigma p}[k] = \begin{cases} s_{\Sigma p}^{-} & für\ e_p[k] > h_\Sigma \\ s_{\Sigma p}^{+} & für\ e_p[k] > h_\Sigma. \\ s_{\Sigma p}[k-1] & sonst \end{cases}$$

Eine derartige Implementierung führt zu kleineren Absolutwerten in der Ableitung $\frac{d}{dt} e_p$ , welche besonders vorteilhaft sind, um eine Trajektorienverfolgung der Referenzströme aufrechtzuerhalten.

Der virtuelle Strom $i_v$ wird ferner insbesondere dazu verwendet, die erforderliche Zwischenkreisspannung im Umrichter zu minimieren bzw. nach unten zu optimieren. Hierdurch wird eine bessere Ausnutzung des Umrichters ermöglicht.

Der Referenzwert für Gesamtstrom einer Phase $i^*_{gp}$ wird als Sollwert verwendet und wird bevorzugt so eingestellt, dass symmetrische Netzströme entstehen. Vorzugsweise erfolgt das Verändern der ersten Schalterstellung des ersten Umrichtermoduls und/oder der zweiten Schalterstellung des zweiten Umrichtermoduls in Abhängigkeit eines Referenzwertes für einen Strom einer Phase eines Umrichters, insbesondere unter Verwendung eines Toleranzbandes.

Es wird also insbesondere vorgeschlagen, dass zusätzlich Referenzwerte für die einzelnen Phasen der einzelnen Umrichter verwendet werden.

Diese Referenzwerte können insbesondere in der unterlagerten Regelung verwendet werden.

Bspw. gibt die überlagerte Regelung vor, wie viele Schalter geschaltet werden sollen. Die unterlagerte Regelung wählt nun anhand der Referenzwerte aus, welches die entsprechenden, zu schaltenden Schalter sind.

In einem Fall beträgt bspw. ein Referenzwert für einen Strom einer Phase eines Umrichters 1kA und ein anderer Referenzwert für eine andere Phase eines Umrichters 2kA. Durch Schalten der entsprechenden Schalter würden die Umrichter jeweils 2kA erzeugen. Die unterlagerte Regelung vergleicht diese Werte und stellt im letzteren Fall eine geringere Abweichung fest und schaltet deswegen diesen Schalter bzw. schaltet deswegen dieses Umrichtermodul (ein).

Durch die Auswahl, welches der Umrichtermodule eingeschaltet bzw. geschaltet werden soll, lässt sich Einfluss auf die Aufteilung des Netzstroms auf die einzelnen Umrichter nehmen. In einer bevorzugten Ausführungsform findet eine Priorisierung zum (Ein- )Schalten der Umrichtermodule statt, die bevorzugt folgendes berücksichtigt:

- ob ein Überschreiten oder Unterschreiten eines Bandes um die Referenz bzw. den Referenzwert $i^*_{cp,j}$ detektiert wurde,
- den Strom $i_{cp,j}$,
- die aktuelle Schalterposition $s_{p;j}$ sowie
- weitere Statusinformationen, die z. B. anzeigen, ob ein Schalter für einen Wechsel der Schaltposition gesperrt wurde, weil er evtl. gerade erst betätigt wurde oder die signalisieren, ob ein Schalter deaktiviert wurde, jedoch noch an der Stromführung beteiligt ist.

Erfindungsgemäß wird ferner ein Erzeuger elektrischer Energie vorgeschlagen, umfassend einen, eine Vielzahl von, bevorzugt parallelen, Umrichtermodulen aufweisenden Umrichter, eine Steuereinheit zum Ansteuern der Umrichtermodule des Umrichters, wobei die Steuereinheit dazu eingerichtet ist, die Schalterstellungen der Umrichtermodul zu verändern und ein Verfahren wie vorstehend oder nachstehend beschrieben auszuführen.

Bevorzugt ist der Erzeuger elektrischer Energie eine Windenergieanlage, insbesondere wobei der Umrichter als Leistungsumrichter mit wenigstens 3 MW ausgeführt ist.

In einer weiter bevorzugten Ausführungsform sind die Umrichtermodule im Wesentlichen gleich ausgeführt.

Die vorliegende Erfindung wird nun nachfolgend anhand der begleitenden Figuren näher erläutert, wobei für gleich oder ähnliche Bauteile oder Baugruppen dieselben Bezugszeichen verwendet werden.

Fig. 1 zeigt schematisch und exemplarisch eine perspektivische Ansicht einer Windenergieanlage in einer Ausführungsform.

Fig. 2 zeigt schematisch und exemplarisch einen Aufbau eines elektrischen Stranges einer Windenergieanlage in einer Ausführungsform.

Fig. 3 zeigt schematisch und exemplarisch den Aufbau eines Umrichters.

Fig. 4 zeigt schematisch und exemplarisch den Aufbau einer Steuereinheit eines Umrichters.

Fig. 5 zeigt schematisch und exemplarisch den Ablauf eines Verfahren zum Steuern eines Umrichters.

Fig. 1 zeigt eine perspektivische Ansicht einer Windenergieanlage 100.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel an. Der Generator erzeugt hierdurch einen einzuspeisenden Strom, der mittels eines Wechselrichters in ein elektrisches Versorgungnetz eingespeist wird.

Fig. 2 zeigt schematisch und exemplarisch einen elektrischen Strang 100' einer Windenergieanlage 100, wie bevorzugt in Figur 1 gezeigt.

Der aerodynamische Rotor der Windenergieanlage 106 ist mit dem Generator 120 der Windenergieanlage verbunden. Bevorzugt ist der Generator 120 dabei als sechsphasiger Ringgenerator ausgebildet.

Der Generator 120 ist ferner über einen Umrichter 130 mittels einer Netzschutzeinrichtung 140 und eines Transformators 150 mit einem elektrischen Versorgungsnetz 200 verbunden bzw. an das elektrische Versorgungsnetz 200 angeschlossen.

Um die vom Generator 120 erzeugte elektrische Leistung in einen einzuspeisenden Strom Ig umzuwandeln, weist der Umrichter 130 am Umrichtereingang einen Gleichrichter 132 auf. Der Gleichrichter 132 ist zudem mit einem ersten Gleichspannungszwischenkreis 133 verbunden. Der erste Gleichspannungszwischenkreis 133 wiederum ist mit einem Hochsetzsteller 134 verbunden. Der Hochsetzsteller 134 ist wiederum mit einem Chopper 135 verbunden. Der Chopper 135 ist wiederum mit einem zweiten Gleichspannungszwischenkreis 136 verbunden. Der zweite Gleichspannungszwischenkreis 136 ist wiederum mit einem Wechselrichter 137 verbunden. Der Wechselrichter 137 selbst bildet dabei den Umrichterausgang aus, welcher mit einer Netzschutzeinrichtung 140 versehen ist. Der Wechselrichter 137 besteht dabei aus einer Vielzahl von Wechselrichtermodule 137', wie bspw. in Fig. 3 gezeigt, und erzeugt einen Gesamtstrom $i_{gp}$.

Die Netzschutzeinrichtung 140 umfasst beispielsweise eine Entkopplungsdrossel 142, einen Filter 144 und eine Netzdrossel 146. In einer bevorzugten Ausführungsform ist die Netzschutzeinrichtung 140 also als LCL-Filter ausgebildet. Die Netzschutzeinrichtung 140 formt also aus dem erzeugten Gesamt $i_{gp}$ einen einzuspeisenden Strom $I_{inj}$.

Um den einzuspeisenden Strom $I_{inj}$ in das elektrische Versorgungnetz 200 einzuspeisen, ist ferner ein Windenergieanlagentransformator 150 vorgesehen, der bevorzugt im SternDreieck geschaltet ist.

Das elektrische Versorgungsnetz 200, an das die Windenergieanlage 100 mittels des Transformators 150 angeschlossen ist, kann beispielsweise ein Windparknetz sein oder ein elektrisches Versorgungs- oder Verteilnetz.

Zum Steuern des elektrischen Stranges 100' ist ferner eine Steuereinheit 160 vorgesehen.

Die Steuereinheit 160 ist dazu eingerichtet, den erzeugten Gesamtstrom $i_{gp}$ und/oder den einzuspeisenden Strom $I_{INJ}$ mittels eines Stromerfassungsmittels 162 zu erfassen. Bevorzugt werden insbesondere die Ströme eines jeden Umrichtermoduls 137' in jeder Phase erfasst.

Zudem weist die Steuereinheit auch Spannungserfassungsmittel 164 auf, die dazu eingerichtet sind, eine Netzspannung des elektrischen Versorgungnetzes 200 zu erfassen.

In einer besonders bevorzugten Ausführungsform ist die Steuereinheit 160 zudem dazu eingerichtet, auch den Phasenwinkel und die Amplitude des einzuspeisenden Stromes $I_{inj}$ zu erfassen.

Aus den so erfassten Werten bestimmt die Steuereinheit 160 anschließend mittels eines vorstehend oder nachstehend beschriebenen Verfahrens die Schalterstellungen $S_{p,j}$.

Zusätzlich kann die Steuereinheit 160 ferner dazu eingerichtet sein, zusätzlich zu den Schalterstellungen $S_{p,j}$. entsprechende Totzeiten $T_{p,j}$ für die einzelnen Schalter der Umrichtermodule 137' zu bestimmen.

Die Steuereinheit übergibt die Schalterstellungen $S_{p,j}$. und die Totzeit $T_{p,j}$ dann an die entsprechenden Steuerungen der Umrichtermodule.

Fig. 3 zeigt schematisch und exemplarisch den Aufbau eines Umrichters 130, insbesondere des Wechselrichters 137 einer Windenergieanlage, bevorzugt wie in Fig. 2 gezeigt.

Der Wechselrichter 137 umfasst drei Wechselrichtermodule 137', die stellvertretend für eine Vielzahl von Wechselrichtermodulen 1, 2, ..., n stehen.

Die Wechselrichtermodule 137' sind gleichspannungsseitig über einem Gleichspannungszwischenkreis mit einer Zwischenkreisspannung $U_c$ verbunden.

Die Zwischenkreisspannung $U_c$ weist ein positives Potential $DC^+$ und ein negatives Potential $DC^-$ auf, die bevorzugt dem Betrage nach im Wesentlichen gleich groß sind.

Ferner sind die Wechselrichtermodul 137' wechselspannungsseitig über dreiphasiges Wechselspannungsnetz mit den Phasen P1, P2, P3 verbunden. Die Phasen P1, P2, P3 können dabei auch vereinfach als Phase p mit fortlaufender Nummerierung 1, 2, 3 verstanden werden.

Die Phasen p weisen jeweils eine Induktivität L sowie eine magnetische Kopplung M auf und sind in Stern mittels eines Sternpunktes N geschaltet, der einen Neutralleiter mit einer Spannung $U_e$ führt.

Jedes Umrichtermodul 137' weist einen Schalter $S_{cp,j}$ für jede Phase p auf, wobei der Schalter $S_{c1,1}$ $S_{c2,1}$ und $S_{c3,1}$ die diskreten Werte +1 und -1 einnehmen kann. Hierdurch erzeugt jedes Umrichtermodul 137' einen Strom $i_{c1,j}$ pro Phase p. Das erste Umrichtermodul erzeugt also in der ersten Phase P1 den Strom $i_{c1,1}$, in der zweiten Phase P2 den Strom $i_{c2,1}$ und in der dritten Phase den Strom $i_{c3,1}$.

Diese so erzeugten Ströme $i_{c1,j}$ werden mittels Knotenpunkten AC1, AC2, AC3 in jeder Phase P1, P2, P3 zu jeweils einem Summenstrom $i_{g,1}$, $i_{g,2}$, $i_{g,3}$ zusammengeführt, die den Gesamtstrom $i_{gp}$ ergeben.

Jede Phase P1, P2, P3 weist zudem eine Gesamtinduktivität $L_g$ sowie eine Spannung $U_{g1}$, $U_{g2}$, $U_{g3}$ auf.

Fig. 4 zeigt schematisch und exemplarisch den Aufbau einer Steuereinheit 160 eines Umrichters, insbesondere wie in Figur 3 gezeigt.

Der Umrichter ist als Wechselrichter 137 ausgebildet und weist eine Vielzahl von Wechselrichtermodulen 137' auf, die jeweils einen dreiphasigen Strom $i_{p,1}$, $i_{p,3}$ erzeugen, die zu einem Gesamtstrom $i_{gp}$ überlagert werden.

Der Wechselrichter 137 bzw. die Wechselrichtermodule 137' werden mittels der Steuereinheit 160 durch Schaltsignale für die Schalter in Form der einzunehmenden Schalterstellungen $S_{p,j}$ gesteuert. Das erste Wechselrichtermodul 137' weist also hierdurch die Schalter-stellungen $S_{p,1}$ und das zweite Wechselrichtermodul 137' die Schalterstellungen $S_{p,2}$ auf.

Es wird also zunächst einmal vorgeschlagen, die Wechselrichtermodule 137' im Verbund zu betreiben, insbesondere parallel zu betreiben.

Die Steuereinheit 160 besteht im Wesentlichen aus zwei Regelungen, nämlich aus einer überlagerten Regelung A, B, D und einer unterlagerten Regelung C, E.

Die überlagerte Regelung A, B, D hat dabei im Wesentlichen die Aufgabe, zu bestimmen, wieviel geschaltet werden muss, um bestimmte Sollwerte zu erfüllen. Die unterlagerte Regelung C, E hat dabei im Wesentlichen die Aufgabe, zu bestimmen, wer geschaltet werden muss, damit die Umrichtermodule 137' möglichst gleichmäßig belastet und/oder nicht überlastet werden. Als Kriterium für ersteres wird bspw. ein zu erreichender Referenzwert für den Gesamtstrom $i^*_{gp}$ verwendet, der auch als Soll-Gesamtstrom bezeichnet werden kann. Als Kriterium für letzteres wird bspw. ein nicht zu überschreitender Referenzwert $i^*_{cp,j}$ für einen Strom einer Phase eines Umrichtermoduls verwendet.

Die überlagerte Regelung A, B, D weist hierfür einen Auswahlblock A, einen Referenzblock B und einen Toleranzbandblock D auf.

Der Auswahlblock A trifft eine Vorauswahl, bspw. mittels der Gleichung:

$$S_{\Sigma p}^{\mp} = \pm 2\left\lfloor \pm\frac{1}{2}\left(\left(U_{gp} - U_0 + L_{\alpha\beta}\left(\frac{d}{dt}i_{gp}^* + \frac{d}{dt}i_v^*\right) \pm U_{res}\right)\frac{2n}{U_c} + n \bmod 2\right)\right\rfloor - n \bmod 2$$

und erzeugt hieraus die Vorauswahl für einen oberen Wert der Schalterstellungen $s_{\Sigma p}^{+}$ und die Vorauswahl für einen unteren Wert der Schalterstellungen $s_{\Sigma p}^{-}$.

Der Referenzblock B generiert zudem einen Referenzwert $i^*_v$ für den virtuellen Strom $i_v$, bspw. auf Basis der Gleichung:

$$\frac{d}{dt}i_v^* = -\frac{U_c}{4nL_v}\left(min\left(\left\{s_{\Sigma p}^* | p = 1,2,3\right\}\right) + max\left(\left\{s_{\Sigma p}^* | p = 123\right\}\right)\right)$$

mit

$$s_{\Sigma p}^* = \frac{2n}{U_c}\left(U_{gp} - U_0 + L_{\alpha\beta}\frac{d}{dt}i_{gp}^*\right)$$

sowie einen Referenzwert $i^*_{gp}$ für den Gesamtstrom $i_{gp}$.

Der Referenzwert $i^*_{gp}$ kann bspw. durch eine Leistungsregelung der Windenergieanlage oder durch einen Netzbetreiber als Sollwert vorgegeben werden.

Der Toleranzbandblock D ermittelt dann aus diesen Werten $s_{\Sigma p}^{+}$, $s_{\Sigma p}^{-}$, $i_v^*$, $i_{gp}^*$ und unter Verwendung des virtuellen Stromes $i_v$ und des Gesamtstromes $i_{gp}$ die Summe aller Schalterstellungen des Umrichters $S_{\Sigma 123}$ und übergibt diese als Sollvorgabe an die unterlagerte Regelung, insbesondere den nachfolgend beschriebenen Schaltblock E, welcher aus dieser Sollvorgabe die einzelnen Schalterstellungen der Schalter der Umrichtermodule ermittelt.

Die unterlagerte Regelung C, E weist hierfür einen Referenzblock C und einen Schaltblock E auf.

Der Referenzblock C erzeugt einen Referenzwert $i^*_{cp,j}$ für einen jeden Strom einer Phase jedes Umrichtermoduls $i_{cp,j}$. Dieser Referenzwert $i^*_{cp,j}$ berücksichtigt bspw. einen maximal zulässigen Strom des Umrichtermoduls. Der Referenzwert $i^*_{cp,j}$ kann aber bspw. auch dafür verwendet werden, eine Lastaufteilung innerhalb der Phasen der Umrichtermodule zu erzeugen, bspw. bei möglichen thermischen Problemen.

Der Schaltblock E erzeugt aus diesem Referenzwert $i^*_{cp,j}$ und unter Berücksichtigung der Sollvorgabe $S_{\sum 123}$ der überlagerten Regelung, nämlich der Summe aller Schalterstellungen des Umrichters $S_{\sum 123}$ die einzelnen Schalterstellung $S_{p,j}$ einer jeden Phase p eines jeden Umrichtermoduls j.

Darüber hinaus ermittelt der Schaltblock E aus einem erfassten Gesamtstrom $i_{gp}$, der bspw. durch alle Ströme aller Phasen aller Umrichtermodule $i_{cp,j}$ ermittelt wurde, einen virtuellen Strom $i_v$ bspw. mittels der Gleichung:

$$L_v \frac{d}{dt} i_v = \frac{U_c}{2n} s_{\Sigma 0}$$

und übergibt sowohl den Gesamtstrom igp als auch den virtuellen Strom iv an die überlagerte Regelung A, B, D, insbesondere den Toleranzbandblock D.

Die unterlagerte Regelung C, E, insbesondere der Schaltblock E, rechnet also die, durch die überlagerte Regelung A, B, D bestimmte Summe aller Schalterstellung $S_{\sum 123}$ in die einzelnen Schalterstellung $S_{p,j}$ um. Mit anderen Worten, die überlagerte Regelung bestimmt, wie viele Umrichtermodule eingeschaltet sein sollen und die unterlagerte Regelung bestimmt, welche Umrichtermodule eingeschaltet sein sollen.

In einer bevorzugten Ausführungsform werden die Referenzblöcke A, B, C in einem Referenzmodul 166 ausgeführt, insbesondere nach den Gleichungen:

$$s_{\Sigma p}^{\mp} = \pm 2 \left\lfloor \pm \frac{1}{2} \left( \left( U_{gp} - U_0 + L_{\alpha\beta} \left( \frac{d}{dt} i_{gp}^* + \frac{d}{dt} i_v^* \right) \pm U_{res} \right) \frac{2n}{U_c} + n \bmod 2 \right) \right\rfloor - n \bmod 2$$

$$i_{123}^* = T^{-1} \left( i_d^* \cos(\varphi), i_q^* \sin(\varphi), 0 \right)^T,$$

$$\frac{d}{dt} i_v^* = -\frac{U_c}{4nL_v} \left( \min\left( \{ s_{\Sigma p}^* | p = 1,2,3 \} \right) + \max\left( \{ s_{\Sigma p}^* | p = 123 \} \right) \right)$$

und

$$s_{\Sigma p}^* = \frac{2n}{U_c} \left( U_{gp} - U_0 + L_{\alpha\beta} \frac{d}{dt} i_{gp}^* \right).$$

Die Koordinierung der parallelen Umrichter wird also insbesondere dadurch gelöst, dass die Umrichtermodule als Gesamtsystem in einem approximierten Gleitregime betrieben werden.

Hierzu werden eine überlagerte Regelung A, B, D und eine unterlagerte Regelung C, E verwendet.

Für die überlagerte Regelung A, B, D werden also geeignete Koordinaten gewählt (die Fehlerkoordinaten $e_{123}$), in denen ein Toleranzbandregler implementiert wird. Das Teilsystem des virtuellen Stroms wird in der Recheneinheit mit simuliert, ansonsten aber als Teil der Regelstrecke aufgefasst. Die Einführung dieses Teilsystems ist wesentlich für die Entkopplung der Schalterstellungen $s_{\sum 123}$, die die Summe der Schalterstellungen einer Phase über alle Umrichter bezeichnen. Damit ist insbesondere gemeint, dass sich Schalthandlungen einer Komponente von $s_{\sum 123}$ nur auf den Anstieg der korrespondierenden Komponente von e123 auswirken.

Dieser überlagerte Regler, dessen Referenzen in Block B generiert wurden, legt also nur die Schalterstellung $s_{\sum 123}$ des Mehrpunktstromrichters fest. Im Falle einer Parallelschaltung von n Zweipunktstromrichtern kann jede Komponente von $s_{\sum 123}$ Werte aus der Menge

$$S = \{-n;-n+2, \dots , n\}$$

annehmen.

Die Wahl der Werte wird, dank der Entkopplung für jede Phase separat, einem Toleranzbandregler, also bspw. Block D überlassen, der aus einer zuvor getroffenen Vorauswahl, nämlich der Werte $s_{\Sigma p}^{+}$ und $s_{\Sigma p}^{-}$ jeweils den Wert wählt, der den Betrag der Regelabweichung reduziert. Die Vorauswahl, also bspw. Block A, ist dabei so gestaltet, dass der Betrag der Ableitung des Regelfehlers möglichst klein ist. Dies sorgt für möglichst lange Zeiten zwischen Schalthandlungen und reduziert damit die Schaltverluste.
In einer weiteren Ausführungsform ist es auch möglich, dass der Toleranzbandregler in Block D mit einer zweiten, größeren Hysterese ausgestattet wird. An diesen Stellen ist dann der Wert n oder -n aus der Menge S zu wählen. Dies hilft in Fällen, in denen die Vorauswahl auf Grund sich plötzlich ändernder Parameter ungünstig getroffen wurde, insbesondere dann, wenn die Vorauswahl in Block A mit einer geringeren Wiederholrate läuft als der Stromregler in Block D.
In einer weiteren Ausführungsform wird die Auswahl der Referenz für den virtuellen Strom in Block B so getroffen, dass eine bestmögliche Ausnutzung der Zwischenkreisspannung erfolgt.
Durch die unterlagere Regelung C, E wird dafür gesorgt, dass die Ströme in den einzelnen Umrichtern nicht zu stark voneinander abweichen bzw. dass eine gewünschte Lastverteilung auf die Umrichter sichergestellt wird. Auch hier kann jede Phase getrennt von den anderen betrachtet werden, was eine Parallelisierung der Abarbeitung ermöglicht.
Dazu sind zunächst Referenzen $i_{cp,j}$, $p$ = 1,2,3, $j$ = 1,2, ..., $n$ verträglich zu wählen, was insbesondere im Block C erfolgt. Es werden nun so viele Umrichter eingeschaltet (der obere Halbleiterschalter aktiviert), wie durch den überlagerten Regler vorgegeben wurde, dies geschieht bevorzugt im Block E. Durch die Auswahl, welche der n Umrichter eingeschaltet werden, lässt sich Einfluss auf die Aufteilung des Netzstroms auf die einzelnen Umrichter nehmen. In einer weiteren Ausführungsform findet eine Priorisierung zum Einschalten statt, die folgendes berücksichtigt:

- ob ein Überschreiten oder Unterschreiten eines Bandes um die Referenz $i_{cp,j}^{*}$ detektiert wurde,
- den Strom $i_{cp,j}$,
- die aktuelle Schalterposition $s_{p;j}$ sowie
- weitere Statusinformationen, die z. B. anzeigen, ob ein Schalter für einen Wechsel der Schaltposition gesperrt wurde, weil er evtl. gerade erst betätigt wurde oder die signalisieren, ob ein Schalter deaktiviert wurde, jedoch noch an der Stromführung beteiligt ist.

In einer bevorzugten Ausführungsform wird zudem eine schnelle Kommunikation eingerichtet, so dass auf einer zentralen Baugruppe die Messwerte der Ströme nach einer geringen Latenzzeit vorliegen und die daraus berechneten Stellgrößen dort berechnet und dann ebenso latenzarm wieder an die Umrichter kommuniziert werden.
Es wird also vorgeschlagen, dass insbesondere unter der Annahme eines in Figur 3 gezeigten Systems wie folgt verfahren wird:
Da die Summe der Schaltfunktionen der einzelnen Umrichtermodule durch die beschriebene Steuerung festgelegt wird, bleibt zu entscheiden, wie dieses Gesetz auf die Umrichtermodule verteilt werden soll und wie die Umrichtermodule die internen oder zirkulierenden Ströme begrenzen sollen. Daher wird das folgende Schema für jede Phase eingeführt:
Als erstes werden die Referenzwerte für die Ströme $i_{cp,j}^{*}$ für jeden Strom festgelegt, sodass gilt

$$\sum_{j}^{n} = 1\, i_{cp,j}^{*} = i_{gp}^{*}.$$

Dies erlaubt es die Last für jeden Umrichter einzeln festzulegen.
Als zweites werden die Fehler gemäß

$$e_{p,j} = i_{cp,j} - i_{cp,j}^{*}$$

bestimmt.
Als drittes wird eine Liste erstellt, in der die Umrichtermodulindizes in der Reihenfolge gespeichert werden, in der sie berücksichtigt bzw. geschaltet werden sollen. Zudem werden folgende Regeln berücksichtigt:

1. $e_i$ < -h und $e_j$ > -h, d.h. ein Umrichtermodul wird Vorrang vor einem anderen gegeben, wenn sein geringeres Toleranzband verletzt wurde und das Toleranzband des anderen nicht verletzt wurde oder
$e_i$ < h und ej > h, d. h. einem Umrichtermodul wird Vorrang vor einem anderen gegeben, wenn sein oberes Toleranzband nicht verletzt wurde und das Toleranzband des anderen wurde verletzt,
2. $s_{p,j} = 1$ und $s_{p,j} = -1$, d.h. einem Umrichtermodul wird Vorrang vor einem anderen gegeben, wenn seine Schalterstellung +1 ist und die des anderen -1,
3. $e_i > e_j$, d.h. einem Umrichtermodul wird Vorrang vor einem anderen gegeben, wenn ein Fehler größer ist als bei dem anderen.

Als viertes werden die Schalterstellungen zugewiesen, gemäß

$$s_{p,I1} = \cdots = s_{p,I,k} = 1\ f\ddot{u}r\ s_{\Sigma p} > -n$$

$$s_{p,Ik+1} = \cdots = s_{p,I,n} = 1\ f\ddot{u}r\ s_{\Sigma p} > n$$

mit

$$k = \frac{s_{\Sigma p} + n}{2}.$$

Infolge dieses Schemas ist der Befehl $s_{\Sigma p}$, der von der Steuerung der Netzströme erzeugt wird, immer beibehalten und die internen Ströme werden ebenfalls gesteuert. Bevorzugt wird den Netzströmen hierfür eine höhere Priorität als den zirkulierenden bzw. internen Strömen eingeräumt.

Fig. 5 zeigt schematisch und exemplarisch den Ablauf eines Verfahren zum Steuern eines Umrichters.

In einem ersten Schritt 2010, 2020 werden die Umrichtermodule angesteuert, um jeweils einen elektrischen Wechselstrom $i_{p,1}$, $i_{p,2}$ zu erzeugen.

Die elektrischen Wechselströme $i_{p,1}$, $i_{p,2}$ werden in einem zweiten Schritt 2030 zu einem Gesamtstrom $i_{gp}$ überlagert und in ein elektrisches Versorgungsnetz eingespeist.

Dieser Gesamtstrom $i_{gp}$ wird in einem nächsten Schritt 2040 erfasst.

Zudem wird in einem weiteren Schritt 2050 ein virtueller Strom $i_v$ bestimmt.

Anschließend werden in einem nächsten Schritt 2060 die Schalterstellungen der Umrichtermodule in Abhängigkeit des erfassten Gesamtstrom $i_{gp}$ und des virtuellen Stromes $i_v$ verändert.

Dieses so beschriebene Verfahren wird fortlaufend während des Betriebes des Umrichters durchgeführt.

Das hierin beschriebene Verfahren bzw. die hierin beschriebene Steuereinheit bietet dabei die nachfolgenden wesentlichen Vorteile:

- es bleiben die Vorteile von Gleitregimereglern (hier implementiert als Toleranzbandregler) erhalten (vor allem das sehr gute Trajektorienfolgevermögen) und es treten zusätzlich koordinierte Schalthandlungen auf, wie dies für Systeme mit einer Pulsweitenmodulation viel einfacher erreicht werden kann.

- Die Vorgabe der Toleranzbänder für die Netzströme und die individuellen Ströme kann unabhängig voneinander erfolgen. Das bedeutet, dass die Qualität der (nach außen sichtbaren) Netzströme und der (nach außen nicht sichtbaren) Kreisströme unabhängig voneinander parametriert werden können.

- Es kann eine gewünschte Verteilung des Stroms auf die einzelnen Umrichter erfolgen (bspw. um eine thermische Symmetrierung vornehmen zu können).

- Eine vom Netzwinkel abhängige Wahl der Toleranzbänder ist weiterhin möglich.

- Der Ausfall eines Umrichters kann für das Netz nahezu unmerklich kompensiert werden.

Bezuqszeichenliste

100 Windenergieanlage

100’ elektrischer Strang der Windenergieanlage
102 Turm der Windenergieanlage
104 Gondel der Windenergieanlage
106 aerodynamischer Rotor der Windenergieanlage
108 Rotorblätter der Windenergieanlage
110 Spinner der Windenergieanlage
120 Generator der Windenergieanlage
130 Umrichter
132 Gleichrichter des Umrichters
133 erster Gleichspannungszwischenkreis des Umrichters
134 Hochsetzsteller des Umrichters
135 Chopper des Umrichters
136 zweiter Gleichspannungszwischenkreis des Umrichters
137 Wechselrichter des Umrichters
137’ Wechselrichtermodul
140 Netzschutzeinrichtung des Umrichters
144 Filter der Netzschutzeinrichtung
146 Netzdrossel der Netzschutzeinrichtung
150 Windenergieanlagentransformator
160 Steuereinheit
162 Stromerfassungsmittel
164 Spannungserfassungsmittel
166 Referenzmodul 166
200 elektrisches Versorgungsnetz

AC Wechselstrom
AC1 Knotenpunkt einer ersten Phase
AC2 Knotenpunkt einer zweiten Phase
AC3 Kontenpunkt einer dritten Phase
DC Gleichspannung
$DC^+$ positives Potential der Gleichspannung
$DC_-$ negatives Potential der Gleichspannung
i Strom
I Identitätsmatrix
$i_{cp,j}$ Strom einer Phase eines Umrichtermoduls
$i^*_{cp,j}$ Referenzwert für einen Strom einer Phase eines Umrichtermoduls
$i_{gp}$ Gesamtstrom des Umrichters
$i^*_{gp}$ Referenzwert für den Gesamtstrom des Umrichters
$i_{g,1}$ Gesamtstrom des Umrichters in einer ersten Phase
$i_{g,2}$ Gesamtstrom des Umrichters in einer zweiten Phase
$i_{g,3}$ Gesamtstrom des Umrichters in einer dritten Phase
$i_v$ virtueller Strom
$i^*_v$ Referenzwert für den virtuellen Strom
L Induktitivität, insbesondere einer Phase
$L_g$ Netzinduktivität
$L_v$ Entwurfsparameter einer Induktivität zur Entkopplung
M magnetische Kopplung, insbesondere einer Phase zu einer anderen Phase
N Sternpunkt
S Schalterstellung
$S_{cp,j}$ Schalter
$S_{p,j}$ Schalterstellung einer Phase p eines Umrichtermoduls j
$s_{\sum p}^{+}$ Vorauswahl für oberen Wert der Schalterstellungen
$s_{\sum p}^{-}$ Vorauswahl für untern Wert der Schalterstellungen

| | |
|---|---|
| $S_{\Sigma 123}$ | Summe aller Schalterstellungen des Umrichters |
| $T_{p,j}$ | Totzeit für eine Schalterstellung $S_{p,j}$ einer Phase p eines Umrichtermoduls j |
| u, U | Spannung |
| $U_c$ | Zwischenkreisspannung |
| $U_e$ | Verlagerungsspannung zwischen Zwischenkreis und Nullpunkt |

| | |
|---|---|
| A, B, D | überlagerte Regelung |
| A | Auswahlblock der überlagerten Regelung |
| B | Referenzblock der überlagerten Regelung |
| D | Toleranzbandblock der überlagerten Regelung |
| C, E | unterlagerte Regelung |
| C | Referenzblock der unterlagerte Regelung |
| E | Schaltblock der unterlagerte Regelung |

Indizes

| | |
|---|---|
| 1, 2, ... | fortlaufende Nummerierung |
| c | Strom |
| g | Gesamtstrom |
| j | Nummer des Umrichters |
| p | Nummer der Phase |
| v | virtuell |
| $\Sigma$ | Summe |
| $\alpha$, $\beta$, ... | Koordinate |

**Patentansprüche**

1. Verfahren zum Steuern eines, eine Vielzahl von, bevorzugt parallelen, Umrichtermodulen (1110, 1120) aufweisenden Umrichters (1100), insbesondere Leistungsumrichters einer Windenergieanlage (100), umfassend die Schritte:

   - Ansteuern eines ersten Umrichtermoduls (1110), sodass das Umrichtermodul (1110) in einer ersten Schalterstellung ($S_{p,1}$) einen ersten elektrischen Wechselstrom ($i_{p,1}$) erzeugt,
   - Ansteuern eines zweiten Umrichtermoduls (1120), sodass das Umrichtermodul (1120) in einer zweiten Schalterstellung ($S_{p,2}$) einen zweiten elektrischen Wechselstrom ($i_{p,2}$) erzeugt,
   - Überlagern des ersten elektrischen Wechselstroms und des zweiten elektrischen Wechselstroms zu einem Gesamtstrom ($i_{gp}$),
   - Erfassen des Gesamtstroms ($i_{gp}$) des Umrichters,
   - Bestimmen eines virtuellen Stromes ($i_v$) in Abhängigkeit der ersten und zweiten Schalterstellung ($S_{p,1}$, $S_{p,2}$),
   - Verändern der ersten Schalterstellung des ersten Umrichtermoduls ($S_{p,1}$) und/oder der zweiten Schalterstellung des zweiten Umrichtermoduls ($S_{p,2}$) in Abhängigkeit des Gesamtstromes ($i_{gp}$) und des virtuellen Stromes ($i_v$).

2. Verfahren zum Steuern eines, eine Vielzahl von Umrichtermodulen aufweisenden Umrichters nach Anspruch 1, wobei

   - das erste Umrichtermodul (1110) derart parallel zum zweiten Umrichtermodul (1120) verschaltet ist, dass sich der erste elektrische Wechselstrom ($i_{p,1}$) und der zweite elektrische Wechseltstrom ($i_{p,2}$) zu einem gemeinsamen Umrichterstrom ($i_{gp}$) überlagern.

3. Verfahren zum Steuern eines, eine Vielzahl von Umrichtermodulen aufweisenden Umrichters nach Anspruch 1 oder 2, wobei

   - zum Verändern der ersten Schalterstellung und/oder der zweiten Schalterstellung eine kaskadierte Regelung verwendet wird, die eine überlagerte und eine unterlagerte Regelung aufweist.

**4.** Verfahren zum Steuern eines, eine Vielzahl von Umrichtermodulen aufweisenden Umrichters nach einem der vorstehenden Ansprüche, wobei

- das Erfassen des Gesamtstromes durch ein Erfassen eines jeden Stromes einer jeden Phase eines jeden Umrichtermoduls erfolgt.

**5.** Verfahren zum Steuern eines, eine Vielzahl von Umrichtermodulen aufweisenden Umrichters nach einem der vorstehenden Ansprüche, wobei

- das Verändern der ersten Schalterstellung des ersten Umrichtermoduls ($S_{p,1}$) und/oder der zweiten Schalterstellung des zweiten Umrichtermoduls ($S_{p,2}$) mittels Steuersignalen ($s_{p,j}$) erfolgt.

**6.** Verfahren zum Steuern eines, eine Vielzahl von Umrichtermodulen aufweisenden Umrichters nach einem der vorstehenden Ansprüche, wobei

- das Verändern der ersten Schalterstellung des ersten Umrichtermoduls ($S_{p,1}$) und der zweiten Schalterstellung des zweiten Umrichtermoduls ($S_{p,2}$) in Abhängigkeit einer Summe der Schalterstellungen einer Phase ($s_{\Sigma p}$) über alle Umrichtermodule (1110, 1120) erfolgt, insbesondere unter Verwendung eines Toleranzbandes.

**7.** Verfahren zum Steuern eines, eine Vielzahl von Umrichtermodulen aufweisenden Umrichters nach Anspruch 6, wobei

- die Summe der Schalterstellungen einer Phase ($s_{\Sigma p}$) bestimmt wird aus wenigstens einem der nachfolgenden Liste:

  - einem Summenstrom einer Phase über alle Umrichtermodule ($i_{gp}$);
  - dem virtuellen Strom ($i_v$);
  - einer Funktion für die Schalterstellungen $(s^{\pm}_{\Sigma p})$, umfassend eine Abrundungsfunktion;
  - einem Referenzwert für den virtuellen Strom ($i^*_v$);
  - einem Referenzwert für einen Gesamtstrom einer Phase aller Umrichtermodul ($i^*_{gp}$).

**8.** Verfahren zum Steuern eines, eine Vielzahl von Umrichtermodulen aufweisenden Umrichters nach einem der vorstehenden Ansprüche, wobei

- das Verändern der ersten Schalterstellung des ersten Umrichtermoduls ($S_{p,1}$) und/oder der zweiten Schalterstellung des zweiten Umrichtermoduls ($S_{p,2}$) in Abhängigkeit eines Referenzwertes für einen Strom einer Phase eines Umrichters ($i^*_{cp,j}$) erfolgt, insbesondere unter Verwendung eines Toleranzbandes.

**9.** Erzeuger elektrischer Energie (1000), insbesondere Windenergieanlage (100), umfassend:

- einen, eine Vielzahl von, bevorzugt parallelen, Umrichtermodulen (1110, 1120) aufweisenden Umrichter (1100),
- eine Steuereinheit (1200) zum Ansteuern der Umrichtermodule (1110, 1120) des Umrichters (1100), wobei die Steuereinheit (1200) dazu eingerichtet ist:

  - die Schalterstellungen der Umrichtermodul zu verändern und
  - ein Verfahren nach einem der Ansprüche 1 bis 8 auszuführen.

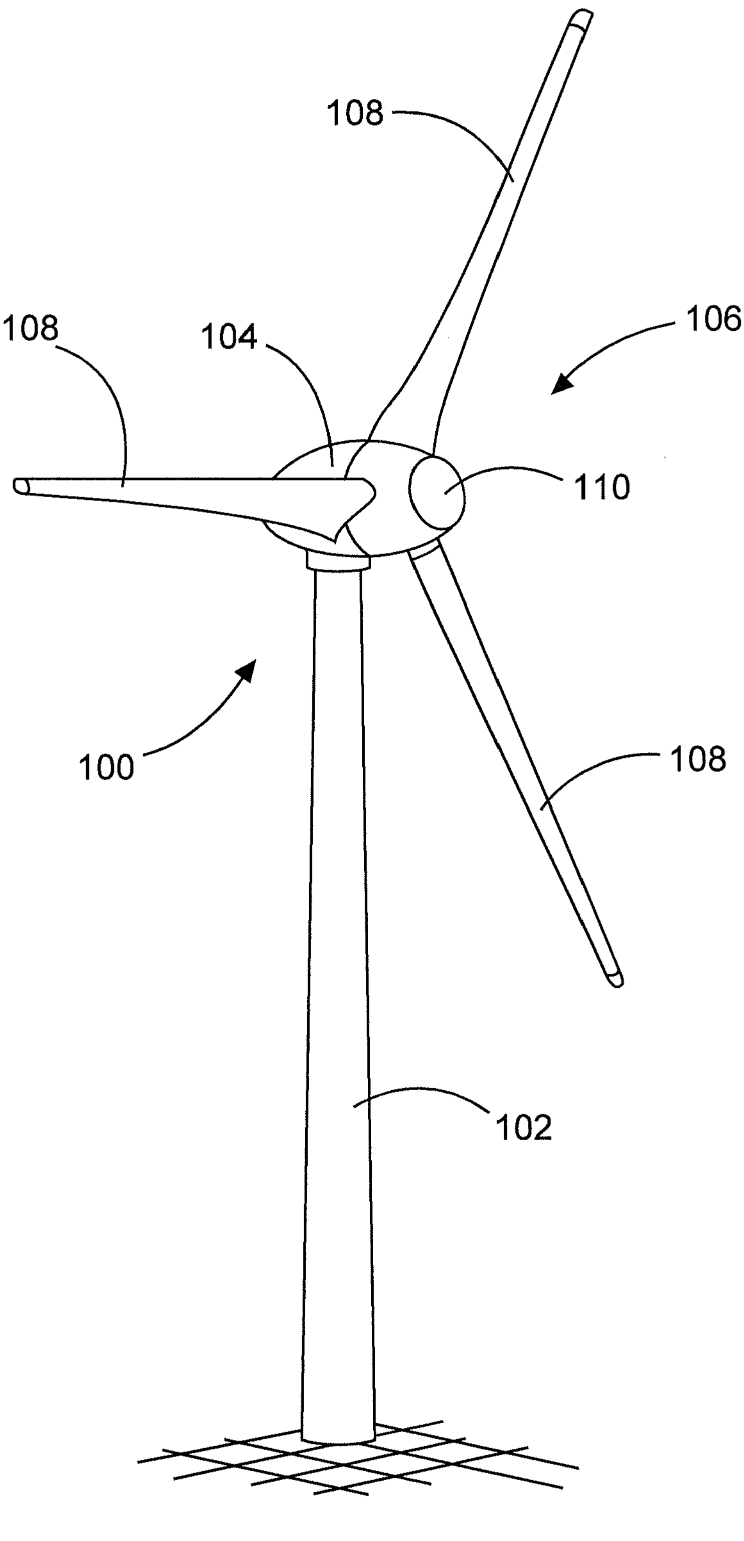


Fig. 1

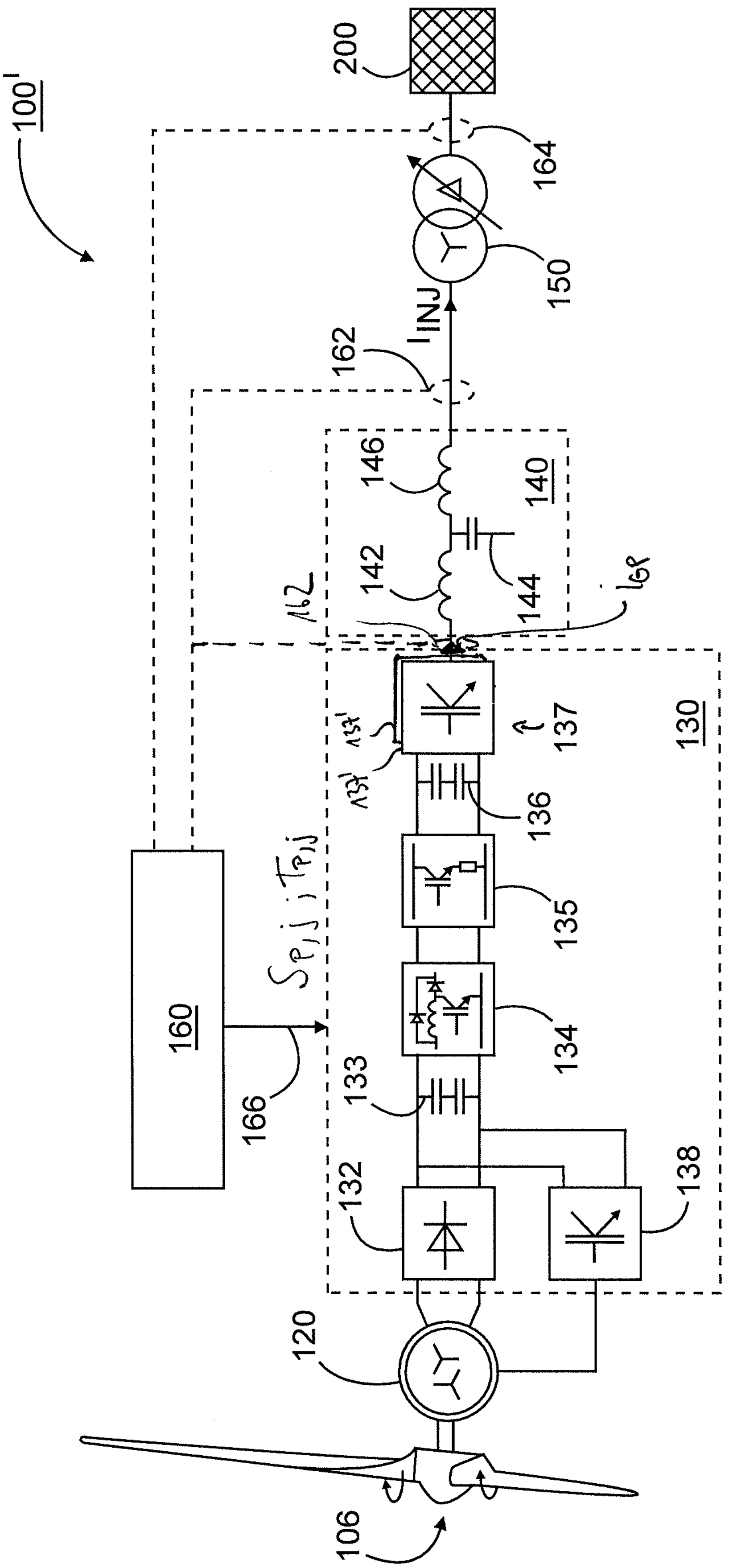
100'
200
164
150
I INJ
162
146
140
142
144
130
137
136
135
134
133
132
138
120
106
160
166

Fig. 2

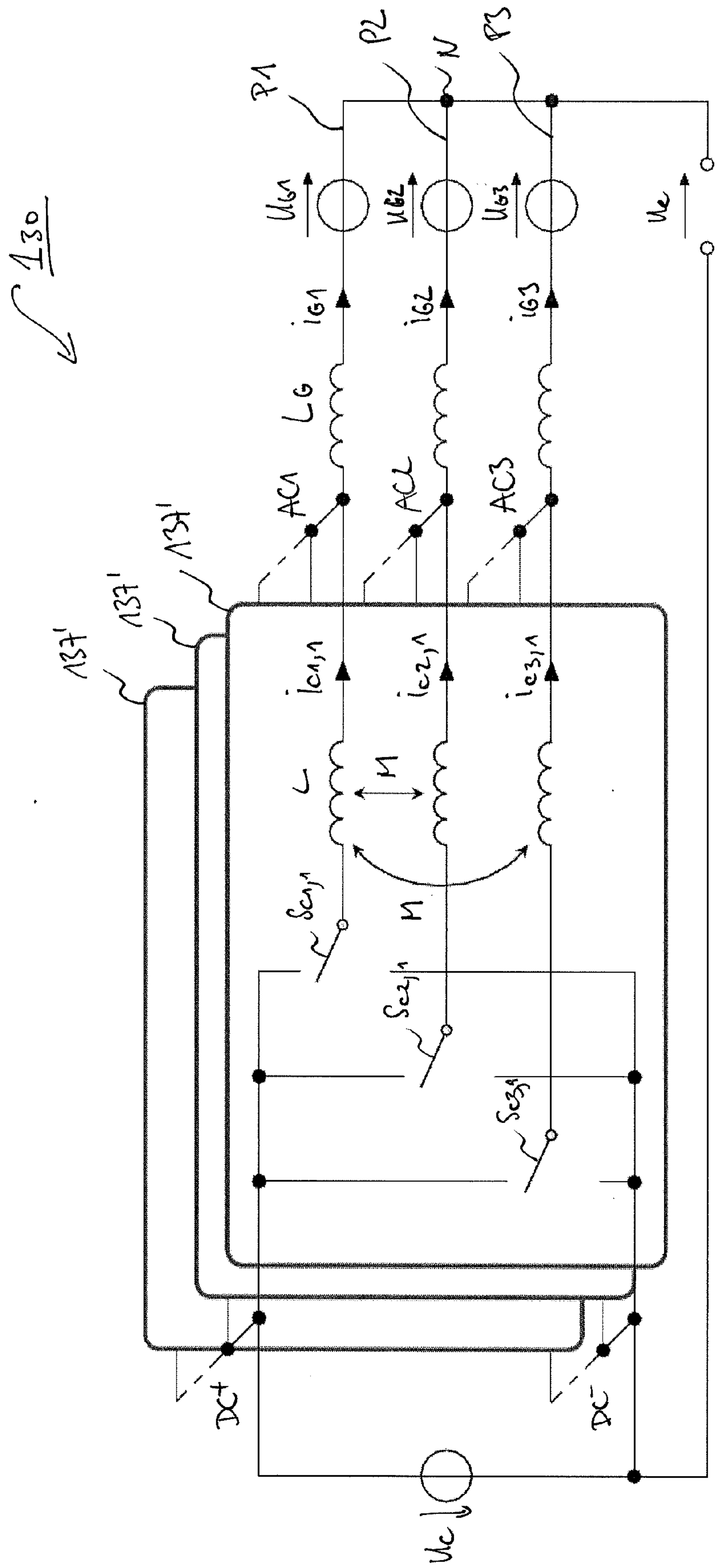


Fig. 3

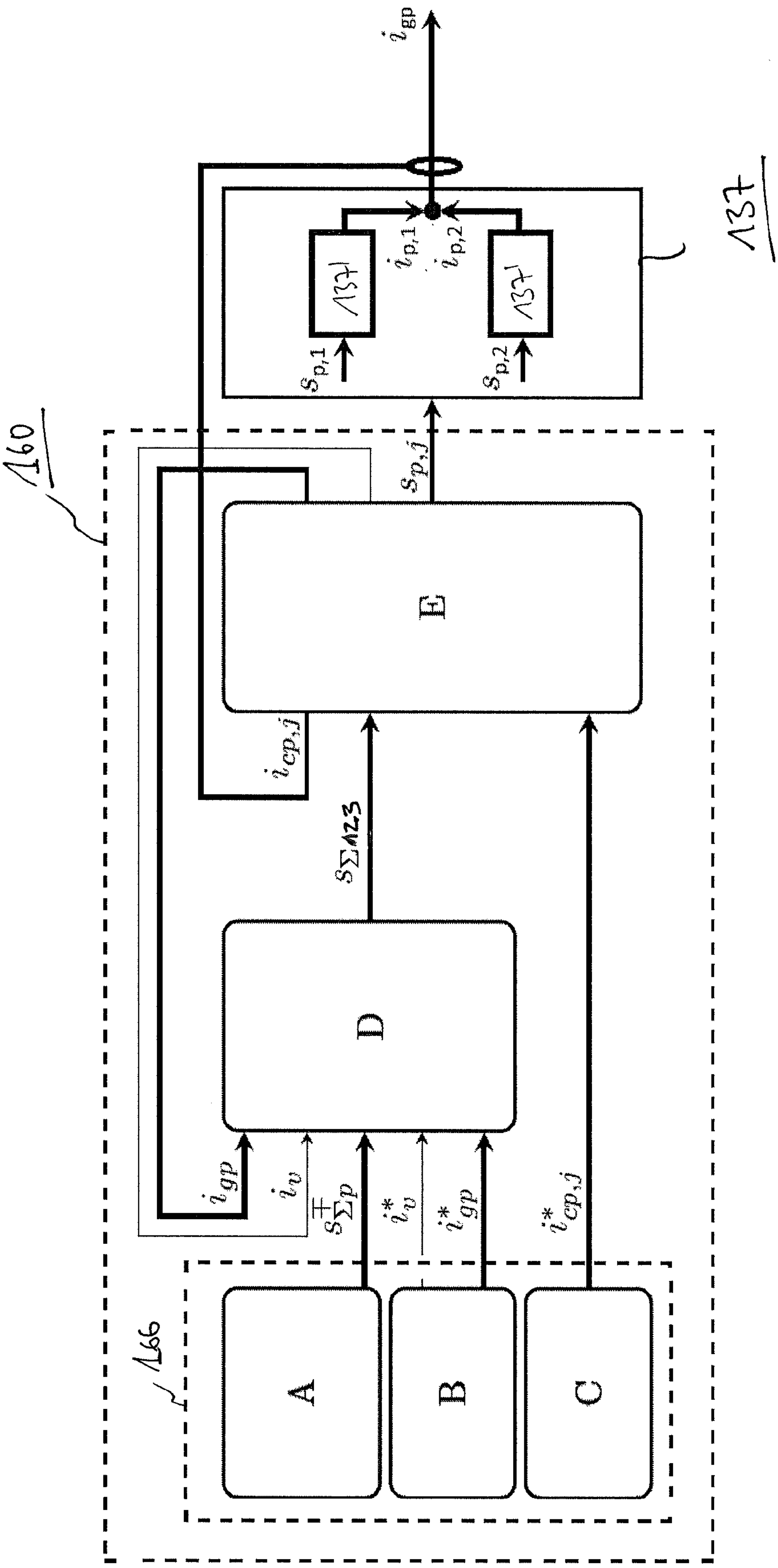
A
B
C
D
E
160
166
137
137'
137'
$i_{gp}$
$i_v$
$s^{\mp}_{\Sigma p}$
$i^*_v$
$i^*_{gp}$
$i^*_{cp,j}$
$s_{\Sigma 123}$
$i_{cp,j}$
$s_{p,j}$
$s_{p,1}$
$s_{p,2}$
$i_{p,1}$
$i_{p,2}$
$i_{gp}$

Fig. 4

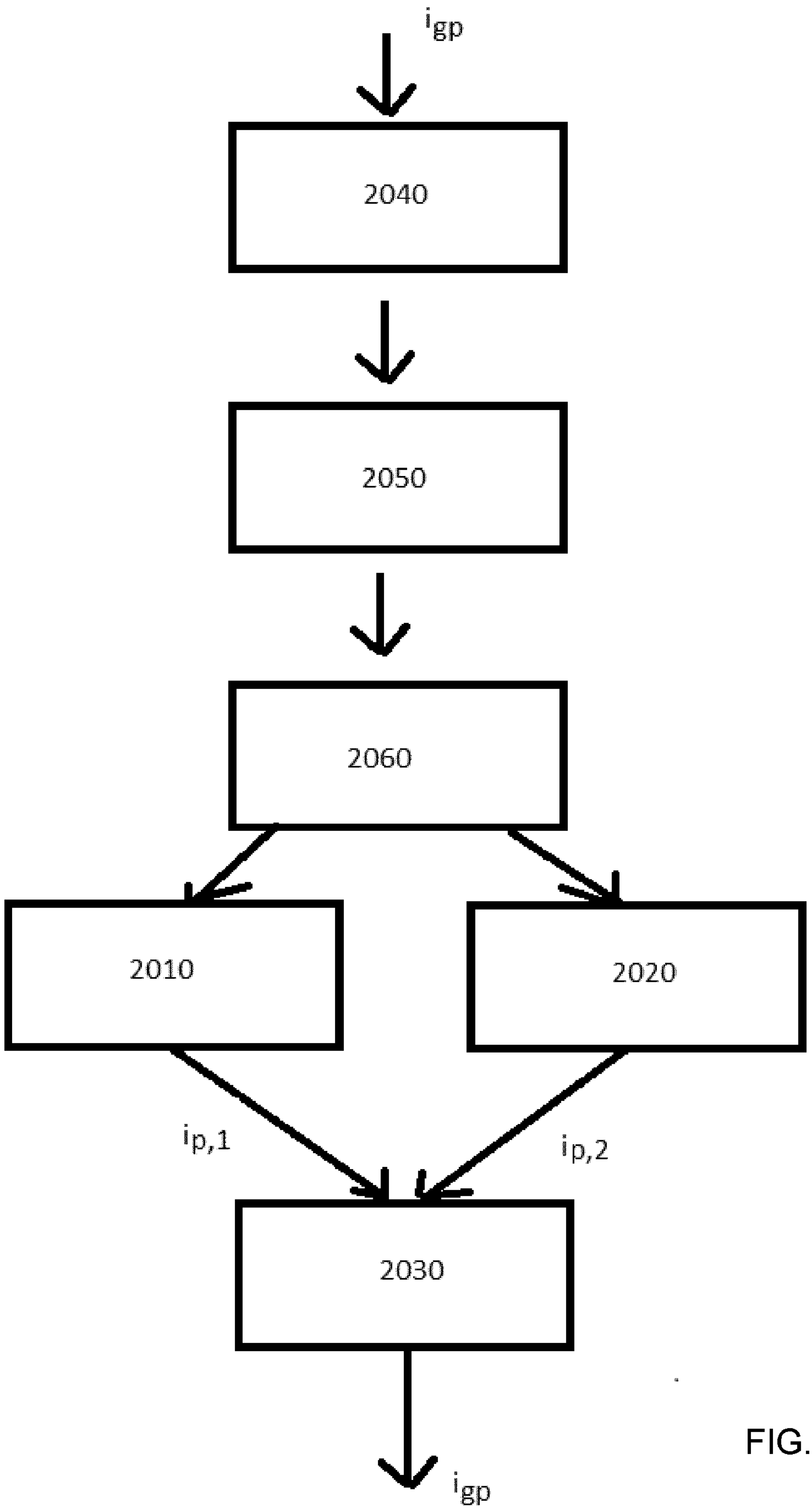


FIG. 5

Europäisches Patentamt
European Patent Office
Office européen des brevets

# EUROPÄISCHER RECHERCHENBERICHT

Nummer der Anmeldung
EP 20 18 2525

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2016 107614 A1 (WOBBEN PROPERTIES GMBH) 26. Oktober 2017 (2017-10-26)<br>* Zusammenfassung *<br>* Absätze [0003], [0050], [0051], [0068], [0069], [0089], [0090], [0096], [0100] - [0102]; Abbildungen 1-7 *<br>----- | 1-6,8,9<br>7 | INV.<br>H02M7/5387<br>H02M7/5395<br><br>ADD.<br>H02M1/32 |
| Y<br>A | WO 2018/138184 A1 (WOBBEN PROPERTIES GMBH [DE]) 2. August 2018 (2018-08-02)<br>* Zusammenfassung; Abbildungen 1-5 *<br>----- | 7<br>1-6,8,9 | |
| A | WO 2016/045963 A1 (WOBBEN PROPERTIES GMBH [DE]) 31. März 2016 (2016-03-31)<br>* Zusammenfassung; Abbildungen 1-4 *<br>----- | 1-9 | |
| | | | RECHERCHIERTE SACHGEBIETE (IPC)<br>H02M |

Der vorliegende Recherchenbericht wurde für alle Patentansprüche erstellt

1

| Recherchenort | Abschlußdatum der Recherche | Prüfer |
|---|---|---|
| Den Haag | 12. November 2020 | Van der Meer, Paul |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 20 18 2525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2020

| Im Recherchenbericht angeführtes Patentdokument | Datum der Veröffentlichung | Mitglied(er) der Patentfamilie | Datum der Veröffentlichung |
|---|---|---|---|
| DE 102016107614 A1 | 26-10-2017 | BR 112018070833 A2 | 05-02-2019 |
| | | CA 3019098 A1 | 02-11-2017 |
| | | CN 109247043 A | 18-01-2019 |
| | | DE 102016107614 A1 | 26-10-2017 |
| | | EP 3449554 A1 | 06-03-2019 |
| | | JP 2019515638 A | 06-06-2019 |
| | | KR 20180136537 A | 24-12-2018 |
| | | RU 2018141103 A | 26-05-2020 |
| | | WO 2017186595 A1 | 02-11-2017 |
| WO 2018138184 A1 | 02-08-2018 | BR 112019015185 A2 | 24-03-2020 |
| | | CA 3049178 A1 | 02-08-2018 |
| | | CN 110249495 A | 17-09-2019 |
| | | DE 102017101359 A1 | 26-07-2018 |
| | | EP 3574561 A1 | 04-12-2019 |
| | | JP 2020505895 A | 20-02-2020 |
| | | KR 20190107124 A | 18-09-2019 |
| | | US 2019348902 A1 | 14-11-2019 |
| | | WO 2018138184 A1 | 02-08-2018 |
| WO 2016045963 A1 | 31-03-2016 | AR 101990 A1 | 25-01-2017 |
| | | AU 2015321143 A1 | 23-03-2017 |
| | | BR 112017005627 A2 | 23-01-2018 |
| | | CA 2960434 A1 | 31-03-2016 |
| | | CN 107112920 A | 29-08-2017 |
| | | DE 102014219052 A1 | 24-03-2016 |
| | | EP 3198716 A1 | 02-08-2017 |
| | | JP 6438127 B2 | 12-12-2018 |
| | | JP 2017528110 A | 21-09-2017 |
| | | KR 20170057365 A | 24-05-2017 |
| | | TW 201630325 A | 16-08-2016 |
| | | US 2017284370 A1 | 05-10-2017 |
| | | UY 36317 A | 29-04-2016 |
| | | WO 2016045963 A1 | 31-03-2016 |

EPO FORM P0461

Für nähere Einzelheiten zu diesem Anhang : siehe Amtsblatt des Europäischen Patentamts, Nr.12/82